(19) **Europäisches Patentamt**
**European Patent Office**
**Office européen des brevets**

(11) **EP 4 510 228 A1**

(12) **EUROPEAN PATENT APPLICATION**
published in accordance with Art. 153(4) EPC

(43) Date of publication:
**19.02.2025 Bulletin 2025/08**

(21) Application number: **23807866.1**

(22) Date of filing: **16.05.2023**

(51) International Patent Classification (IPC):
$H01M\ 4/38^{(2006.01)}$    $H01M\ 4/36^{(2006.01)}$
$H01M\ 4/134^{(2010.01)}$    $H01M\ 10/0525^{(2010.01)}$
$H01M\ 4/02^{(2006.01)}$

(52) Cooperative Patent Classification (CPC):
**H01M 4/02; H01M 4/134; H01M 4/36; H01M 4/38;
H01M 10/0525; Y02E 60/10**

(86) International application number:
**PCT/KR2023/006582**

(87) International publication number:
**WO 2023/224347 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.05.2022 KR 20220059797**

(71) Applicant: **Dongjin Semichem Co., Ltd.
Incheon 22824 (KR)**

(72) Inventors:
• **KANG, Yang Won
  Hwaseong-si, Gyeonggi-do 18635 (KR)**

• **NAM, Jae Bin
  Hwaseong-si, Gyeonggi-do 18635 (KR)**
• **LIM, Hyung Woo
  Hwaseong-si, Gyeonggi-do 18635 (KR)**
• **LEE, Joo Cheol
  Hwaseong-si, Gyeonggi-do 18635 (KR)**
• **YANG, Hui Chan
  Hwaseong-si Gyeonggi-do 18635 (KR)**

(74) Representative: **Grünecker Patent- und
Rechtsanwälte
PartG mbB
Leopoldstraße 4
80802 München (DE)**

(54) **ANODE ACTIVE MATERIAL, ANODE, AND SECONDARY BATTERY COMPRISING SAME**

(57)    Provided is an anode active material, of which conductivity and durability are enhanced by repairing damage to silicon crystals during a secondary granulation process. An embodiment of the present disclosure provides an anode active material comprising: second silicon particles each resulting from aggregation of first silicon particles; and a carbon layer on the second silicon particles, wherein Equation 1 is satisfied in the differential capacity plot for a half-cell comprising the anode active material.

**Description**

**Technical Field**

The present disclosure relates to an anode active material, and more specifically, to the anode active material, an anode, and a secondary battery including the same.

**Background Art**

The rapid growth of the secondary battery market has led to a surge in demand for high-capacity batteries, which has in turn led to a surge in demand for silicon-based anode active materials that can theoretically produce high capacities. However, there was a limit to exhibiting performance equivalent to the theoretical capacity, due to physical breakage caused by volume expansion during charging/discharging and the resulting side reactions. To prevent physical breakage caused by this volume expansion, silicon particles with a size of about 150 nm or less had to be used. Previously, single-crystal silicon of 150 nm or less was produced by synthesizing silicon at the nanoscale. However, in the synthesis of silicon at the nanoscale, a problem arose in that mass production was difficult. To solve this problem, a technology for grinding silicon material to a size of 150 nm or less was introduced.

However, when the primary particles of 150 nm or less obtained by mere grinding were used, a problem arose in that it was difficult for them to adhere to electrodes, due to their excessively large specific surface area. To solve this problem, a process of aggregating the primary particles of 150 nm or less into secondary particles using a device such as a spray dryer was used. However, in the process of grinding silicon into the primary particles, the silicon crystals were damaged and the crystalline size was reduced, which led to a loss of capacity. In addition, when the secondary particles were formed by binding the primary silicon particles together without a binder, a problem arose in that the electrical conductivity and physical durability thereof were significantly reduced.

**DISCLOSURE**

**Technical Problem**

An object of present disclosure is to provide the anode active material capable of restoring damaged silicon crystals in a process of aggregating silicon particles into secondary particles.

Another object of the present disclosure is to provide the anode active material with improved conductivity and durability.

Still another object of the present disclosure is to provide the anode active material that satisfies parameters regarding differential capacity versus voltage (dQ/dV), thereby increasing the initial capacity and capacity retention rate of a secondary battery.

Yet another object of the present disclosure is to provide the anode including the anode active material.

Still yet another object of the present disclosure is to provide a secondary battery including the anode.

The objects of the present disclosure are not limited to the objects mentioned above, and other objects and advantages of the present disclosure which are not mentioned above may be understood from the following description and will be more clearly understood from embodiments of the present disclosure. In addition, it will be easily understood that the objects and advantages of the present disclosure may be achieved by the means and combinations thereof set forth in the claims.

**Technical Solution**

According to a first aspect of the present disclosure for achieving the above objects, there is provided the anode active material including: second silicon particles each composed of an aggregate of first silicon particles; and a carbon layer on the second silicon particle, wherein a differential capacity plot for a half-cell including the anode active material satisfies the following Equation 1:

[Equation 1]

$$R = (dQ^2/dV^2)/(dQ^1/dV^1) \geq 1.2$$

wherein $dQ^1/dV^1$ is the maximum discharge peak of the first charge/discharge cycle at 0.3 to 0.6 V, $dQ^2/dV^2$ is the maximum discharge peak of the second charge/discharge cycle at 0.3 to 0.6 V, and R is the ratio of the maximum discharge peaks.

According to a second aspect of the present disclosure, in the first aspect, R in Equation 1 may be 3.5 or less.

According to a third aspect of the present disclosure, in the first or second aspect, R in Equation 1 may be 1.5 to 2.8.

According to a fourth aspect of the present disclosure, in any one of the first to third aspects, the carbon layer may include any one selected from the group consisting of crystalline carbon, amorphous carbon, and a combination thereof.

According to a fifth aspect of the present disclosure, in any one of the first to fourth aspects, the carbon layer may include the crystalline carbon derived from pitch and the amorphous carbon derived from a carbon precursor.

According to a sixth aspect of the present disclosure, in any one of the first to fifth aspects, the anode active material may have a carbon content of 5 to 80 wt% based on the total weight of the anode active material.

According to a seventh aspect of the present disclosure, in any one of the first to sixth aspects, the anode active material may have a carbon content of 35 to 60 wt% based on the total weight of the anode active material.

According to an eighth aspect of the present disclosure, in any one of the first to seventh aspects, the first silicon particles may have a crystalline size of 15 to 30 nm.

According to a ninth aspect of the present disclosure, in any one of the first to eighth aspects, the first silicon particles may have a crystalline size of 17 to 20 nm.

According to a tenth aspect of the present disclosure, in any one of the first to ninth aspects, the carbon layer may have a thickness of 20 to 80 nm.

According to an eleventh aspect of the present disclosure, in any one of the first to tenth aspects, the carbon layer may have a thickness of 40 to 80 nm.

According to a twelfth aspect of the present disclosure, there may be provided an anode including the anode active material according to any one of the first to eleventh aspects.

According to a thirteenth aspect of the present disclosure, there may be provided a secondary battery including the anode according to the twelfth aspect.

**Advantageous Effects**

According to one aspect of the present disclosure, there may be provided an anode active material having improved conductivity and physical durability while restoring damaged silicon crystals in a process of aggregating first silicon particles (primary particles) into secondary particles. By using such an anode active material, it is possible to increase the initial capacity and capacity retention rate of a secondary battery, thereby significantly improving the performance of the secondary battery.

The effects described above as well as the specific effects of the present disclosure will be described below together with the specific contents for carrying out the present disclosure.

**Mode for Invention**

Hereinafter, each configuration of the present disclosure will be described in more detail so that those of ordinary skill in the art to which the present disclosure pertains can easily implement the present disclosure. However, this is only an example, and the scope of the present disclosure is not limited by the following contents.

In the present specification, singular expressions include plural expressions unless the context clearly indicates otherwise.

In the present specification, the numerical range indicated by using the term "to" refers to a numerical range including the numerical values described before and after the term as the lower limit and the upper limit, respectively. When a plurality of numerical values are disclosed as the upper and lower limits of any numerical range, respectively, the numerical range disclosed in the present specification may be understood as any numerical range that includes any one of the plurality of lower limit values and any one of the plurality of upper limit values as the lower limit value and the upper limit value, respectively.

In the present specification, the "differential capacity plot" is a graph showing the relationship between charge and potential. Specifically, it is a graph obtained by measuring the change in charge depending on the potential of a battery, and expressing the measured change in charge as differentiation with respect to the potential. In general, the electrochemical characteristics of secondary batteries change during the charging and discharging process, and these characteristics can be determined using the differential capacity plot.

One embodiment of the present disclosure provides the anode active material including: second silicon particles each composed of an aggregate of first silicon particles; and a carbon layer on the second silicon particle, wherein a differential capacity plot for a half-cell including the anode active material satisfies the following Equation 1:

[Equation 1]

$$R = (dQ^2/dV^2)/(dQ^1/dV^1) \geq 1.2$$

wherein $dQ^1/dV^1$ is the maximum discharge peak of the first charge/discharge cycle at 0.3 to 0.6 V, $dQ^2/dV^2$ is the maximum discharge peak of the second charge/discharge cycle at 0.3 to 0.6 V, and R is the ratio of the maximum discharge peaks. According to one embodiment of the present disclosure, by providing an anode active material satisfying the parameters of Equation 1, it is possible to provide the anode active material having improved conductivity and physical durability while restoring damaged silicon crystals in a process of aggregating first silicon particles (primary particles) into secondary particles. By using such an anode active material, it is possible to increase the initial capacity and capacity retention rate of a secondary battery, thereby significantly improving the performance of the secondary battery.

Hereinafter, the configuration of the present disclosure will be described in more detail.

**1. Anode Active Material and Method for Producing the Same**

The anode active material according to the present disclosure includes second silicon particles each composed of an aggregate of first silicon particles. The second silicon particles may be produced by aggregation of the first silicon particles. If an electrode is fabricated using the first silicon particles (primary particles) alone without the process of aggregating the first silicon particles into the secondary particles, problems may arise in that the surface of the silicon may be physically broken during lithium intercalation/deintercalation into/from the silicon during charging/discharging of the secondary battery, the silicon has reduced adhesion to the electrode due to its excessively high specific surface area, and the crystalline size becomes smaller, so that the battery cannot exhibit sufficient capacity. According to one embodiment of the present disclosure, by using the secondary silicon particles, it is possible to effectively prevent physical breakage of the silicon surface and to prevent adhesion to the electrode from being reduced.

Specifically, the average particle diameter (D50) of the first silicon particles may be 100 to 200 nm, more specifically 100 to 150 nm. The average particle diameter (D50) of the second silicon particles may be 3 to 30 $\mu$m, specifically 3 to 10 $\mu$m. When the average particle diameter of the second silicon particles satisfies the above numerical range, the adhesion thereof to the electrode and the durability thereof may be improved.

The anode active material according to the present disclosure includes a carbon layer on the second silicon particle. Specifically, the carbon layer may include any one selected from the group consisting of crystalline carbon, amorphous carbon, and a combination thereof. More specifically, the carbon layer may include a combination of crystalline carbon and amorphous carbon. Specifically, the carbon layer may include crystalline carbon derived from pitch and amorphous carbon derived from a carbon precursor. As the carbon layer includes crystalline carbon and amorphous carbon, the conductivity and durability of the anode active material may be improved, so that the capacity and capacity retention rate of the battery may be significantly improved.

A carbon source for producing the crystalline carbon may be, for example, pitch such as coal tar pitch or petroleum pitch, aromatic carbon materials such as sugars, lignin, and cellulose, polyacrylonitrile, etc. Specifically, when pitch is used as a carbon source for producing the crystalline carbon, it may have the advantage of being able to control the content of carbon remaining after heat treatment up to 80% through the softening point.

A carbon precursor for producing the amorphous carbon may be, for example, a gaseous hydrocarbon, specifically, acetylene, toluene, methane, etc. The carbon precursor may be deposited as an amorphous carbon layer on the second silicon particle by chemical vapor deposition (CVD). Since the carbon precursor is continuously supplied in the form of a gas during the process of being deposited as a carbon layer including amorphous carbon, a pore-free carbon layer may be formed. Accordingly, the carbon layer may serve to suppress the formation of an excessive solid-electrolyte interphase (SEI) layer during the charge/discharge process and as a protective layer that protects the silicon from volume expansion.

A differential capacity plot for a half-cell including the anode active material according to the present disclosure may satisfy the following Equation 1:

[Equation 1]

$$R = (dQ^2/dV^2)/(dQ^1/dV^1) \geq 1.2$$

wherein $dQ^1/dV^1$ is the maximum discharge peak of the first charge/discharge cycle at 0.3 to 0.6 V, $dQ^2/dV^2$ is the maximum discharge peak of the second charge/discharge cycle at 0.3 to 0.6 V. According to one embodiment of the present disclosure, when the ratio of $dQ^2/dV^2$ to $dQ^1/dV^1$, which are two variables, satisfies the above numerical range, it is possible to provide the anode active material whose conductivity and durability are improved by effectively restoring damaged crystals through heat treatment. The anode active material may be heat-treated simultaneously with or after forming the secondary silicon particles by aggregating the first silicon particles. The anode active material may be heat-treated simultaneously with or after depositing the carbon layer on the secondary silicon particles. At least one of the second silicon particle and the carbon layer may be formed by a heat treatment process at a temperature of 600 to 1,200°C, specifically 700 to 1,000°C, more specifically 700 to 900°C. If the temperature of the heat treatment process is lower than the lower limit of the above numerical range, a problem may arise in that damaged crystals may not be sufficiently restored, and if the temperature is higher than the upper limit of the above numerical range, a problem may arise in that the first silicon particles may be molted, so that the shape of the first particles cannot be maintained. Specifically, the heat treatment process may be performed by introducing into a calcining furnace secondary particles prepared by dispersing the first silicon particles (obtained by grinding) in a solvent, or secondary particles prepared by dispersing the first silicon particles (obtained by grinding) and pitch in a solvent, and/or secondary particles having a carbon layer deposited thereon by introducing a carbon precursor in a gaseous form through chemical vapor deposition, thereby producing theanode active material. According to one embodiment of the present disclosure, it is possible to achieve the optimal range of $dQ^2/dV^2$ to $dQ^1/dV^1$, which is a correlation between two variables, by performing the heat treatment process, thereby restoring damaged silicon crystals, thus improving the durability of the electrode.

According to another embodiment of the present disclosure, in Equation 1 above, R may be 3.5 or less. Specifically, in Equation 1, R may be 1.5 to 2.8. When the range of R in Equation 1 1 satisfies the above numerical range, the durability of the anode active material and the capacity and capacity retention rate of the battery may be significantly improved.

The anode active material according to the present disclosure may have a carbon content of 5 to 80 wt%, specifically 35 to 60 wt%, more specifically 50 to 60 wt%, based on the total weight of the anode active material. The carbon content may be measured using a conventional elemental analyzer known in the art. When the carbon content is within the above numerical range, the capacity or capacity retention rate of the battery may be improved.

The crystalline size of the first silicon particles according to the present disclosure may be 15 to 30 nm, specifically 17 to 20 nm. The crystalline size of the first silicon particles may be analyzed by X-ray diffraction analysis and calculated using the Scherrer-Wilson equation. When the crystalline size of the first silicon particles is within the above numerical range, the capacity and capacity retention rate of the battery may be further increased.

The thickness of the carbon layer of the anode active material according to the present disclosure may be 1 to 110 nm, specifically 10 to 100 nm, more specifically 20 to 80 nm, even more specifically 40 to 80 nm. The thickness of the carbon layer may be measured by observing a transmission electron microscope (TEM) image of the produced anode active material. When the thickness of the carbon layer is within the above numerical range, the capacity and capacity retention rate of the battery may be further increased.

The BET specific surface area of the anode active material according to the present disclosure may be 10 to 200 $m^2/g$, specifically 10 to 150 $m^2/g$, more specifically 10 to 80 $m^2/g$. The specific surface area of the anode active material may be measured by the Brunauer-Emmett-Teller (BET) analysis method, and may be a result of satisfying the average particle diameter range of the anode active material.

The total pore volume of the anode active material according to the present disclosure may be 0.05 to 1.0 $cm^3/g$, specifically 0.05 to 0.5 $cm^3/g$, more specifically 0.05 to 0.2 $cm^3/g$. The total pore volume may be measured by the Barrett-Joyner-Halenda (BJH) analysis method.

Another embodiment of the present disclosure can provide a method for producing the anode active material.

The method for producing the anode active material according to one embodiment of the present disclosure may include steps of: (S1) producing a dispersion containing first silicon particles; and (S2) spraying the dispersion to produce secondary silicon particles. If necessary, the dispersion may further contain pitch. The content of the pitch may be greater than 0 to 50 parts by weight, specifically 20 to 40 parts by weight, based on 100 parts by weight of the first silicon particles. If the content of the pitch is lower than the lower limit of the above numerical range, a carbon layer including a sufficient amount of crystalline carbon may not be formed, and if the content of the pitch is higher than the upper limit of the above numerical range, the number of pores included in the anode active material may become excessively large.

The method for producing the anode active material according to another embodiment of the present disclosure may further include step (S3) of introducing the secondary silicon particles into a calcining furnace and heat-treating the same at 600 to 1,200°C in the presence of a carbon precursor (gas). Through step (S3), the carbon layer may be obtained in a state in which crystalline carbon and amorphous carbon are mixed, and thus the conductivity and durability thereof may be improved simultaneously. Accordingly, the capacity and capacity retention rate of the battery may be significantly improved.

The thickness and carbon content of the carbon layer may be appropriately adjusted depending on the content of the pitch or the content of the carbon precursor (gas).

According to another embodiment of the present disclosure, the anode active material may further include one or more other anode active materials, such as a carbon-based anode active material, a silicon-based anode active material, or a tin-based anode active material, in addition to the silicon-carbon composite anode active material. The other anode active materials may be, for example, graphite such as natural graphite or artificial graphite, hard carbon, soft carbon, silicon, a silicon alloy, a silicon oxide, tin, a tin alloy, a tin oxide, or a silicon-tin alloy. The other anode active material may be mixed with the secondary silicon particles to form the anode active material. In this case, the content of the silicon-carbon composite anode active material according to the present disclosure may be, for example, 0.5 to 30 wt%, specifically, 5 to 15 wt%, based on the total solid weight of the entire anode active material including the silicon-carbon composite anode active material and the other anode active materials.

## 2. Anode

Another embodiment of the present disclosure may provide an anode slurry and the anode including the anode active material.

The content of the anode active material according to one embodiment of the present disclosure may be 60 to 80 wt% based on the total solid weight of the anode slurry. When the anode active material according to another embodiment of the present disclosure further includes other anode active materials, the content of the anode active material may be 90 to 99 wt%, specifically 95 to 99 wt%, based on the total solid weight of the anode slurry. When the content of the anode active material is within the above numerical range, the anode active material may effectively store the lithium ions deintercalated from the cathode or release the lithium ions, thereby providing a large-capacity or high-output battery.

The anode slurry according to the present disclosure may further include a conductive material, a binder, and a solvent.

As the conductive material, any material that is conductive without causing chemical changes in the battery may be used without particular limitation. For example, the conductive material may include one or more of carbon black, such as carbon black, acetylene black, Ketjen black, channel black, furnace black, lamp black, and thermal black; conductive fibers such as carbon fibers or metal fibers; carbon nanotubes; fluorocarbons; metal powders such as aluminum or nickel powder; conductive whiskers such as zinc oxide and potassium titanate; conductive metal oxides such as titanium oxide; and conductive materials such as polyphenylene derivatives. The content of the conductive material may be, for example, 0.01 to 20 wt% based on the total solid weight of the anode slurry.

The binder is a component that assists in bonding between the conductive material and the anode active material or the current collector, and may be typically included in an amount of 0.1 to 20 wt% based on the total solid weight of the anode slurry. The binder may be, for example, one or a mixture of two or more selected from the group consisting of a polyvinylidene fluoride-hexafluoropropylene copolymer (PVDF-co-HEP), polyvinylidene fluoride, polyacrylonitrile, polymethyl methacrylate, polyvinyl alcohol, carboxymethyl cellulose, starch, hydroxypropyl cellulose, regenerated cellulose, polyvinyl pyrrolidone, tetrafluoroethylene, polyethylene, polypropylene, polyacrylic acid, styrene-butadiene rubber, nitrilebutadiene rubber, and lithium-substituted polyacrylate (lithium polyacrylate, Li-PAA).

The solvent may include, for example, water or an organic solvent such as NMP (N-methyl-2-pyrrolidone).

The anode slurry according to the present disclosure may further include additives such as a dispersant as needed.

The anode according to the present disclosure may be produced by coating at least one surface of a current collector with the anode slurry, followed by drying and pressing.

As the current collector, any material that is conductive without causing chemical changes in the battery may be used without particular limitation. For example, the current collector may include copper, stainless steel, aluminum, nickel, titanium, calcined carbon, copper or stainless steel surface-treated with carbon, nickel, titanium, silver, etc., an aluminumcadmium alloy, etc. The thickness of the current collector is not particularly limited, but may be 3 to 500 $\mu$m, which is typically applied.

## 3. Secondary Battery

Another embodiment of the present disclosure may provide a secondary battery including the anode. Contents overlapping with the above description will be briefly described or omitted.

The secondary battery according to the present disclosure further includes a cathode, a separator interposed between the anode and the cathode, and an electrolyte solution provided for ion movement between the anode and the cathode.

The cathode may be produced by mixing a cathode active material, a conductive material, a binder, and a solvent to obtain a cathode slurry, and then either coating a current collector directly with the cathode slurry, or casting the cathode slurry onto a separate support, and laminating a cathode active material film peeled from the support onto a metal current collector.

The cathode active material may be, for example, one or a mixture of two or more selected from the group

consisting of $LiCoO_2$, $LiNiO_2$, $LiMn_2O_4$, $LiCoPO_4$, $LiFePO_4$, $Li[NiCoMn]O_2$ and $LiNi_{1-x-y-z}Co_xM1_yM2_zO_2$, wherein M1 and M2 are each independently any one selected from the group consisting of Al, Ni, Co, Fe, Mn, V, Cr, Ti, W, Ta, Mg and Mo, and x, y and z are each independently the atomic fractions of oxide composition elements and may satisfy $0 \leq x < 0.5$, $0 \leq y < 0.5$, $0 \leq z < 0.5$, and $0 < x+y+z < 1$.

The separator may be a conventional porous polymer film, for example, any one of porous polymer films made of a polyolefin polymer such as an ethylene homopolymer, a propylene homopolymer, an ethylene/butene copolymer, an ethylene/hexene copolymer, and an ethylene/methacrylate copolymer, or a laminate of these films. In addition, the separator may also be an insulating thin film having high ion permeability and mechanical strength. The separator may include a safety reinforced separator (SRS) having a thin ceramic coating layer formed on the surface. In addition, a conventional porous nonwoven fabric, for example, a nonwoven fabric made of high-melting-point glass fiber, polyethylene terephthalate fiber, etc., may be used as the separator, without being limited thereto.

The electrolyte solution may contain a lithium salt as an electrolyte and an organic solvent that dissolves the lithium salt. As the lithium salt, any lithium salt may be used without limitation as long as it is commonly used in electrolyte solutions for secondary batteries.

As the organic solvent included in the electrolyte solution, those commonly used in electrolyte solutions for lithium secondary batteries may be used without limitation. The organic solvent may be, for example, one or a mixture of two or more selected from the group consisting of propylene carbonate (PC), ethylene carbonate (EC), diethyl carbonate (DEC), dimethyl carbonate (DMC), ethyl methyl carbonate (EMC), methylpropyl carbonate, dipropyl carbonate, dimethyl sulfur oxide, acetonitrile, dimethoxyethane, diethoxyethane, vinylene carbonate, sulfolane, gamma-butyrolactone, propylene sulfite, and tetrahydrofuran.

Hereinafter, examples of the present disclosure will be described in detail so that those of ordinary skill in the art to which the present disclosure pertains can easily carry out the present disclosure. However, this is only an example, and the scope of the present disclosure is not limited by the following contents.

**[Production Example 1: Production of Anode Active Material]**

**<Examples 1 to 4: where the source of the carbon layer is pitch>**

**1.1 Production of Secondary Particles**

Secondary silicon particles were produced by dispersing first silicon particles (D50: 120 nm) obtained by milling and pitch powder in ethanol and spraying the dispersion through a spray dryer. The content of the first silicon particles obtained by milling was adjusted to 3 wt% based on the total weight of the dispersion. Using the nozzle-type spray dryer, pressure (100 Torr) was applied via an inert gas (Ar) to an extent that droplets could be evenly sprayed, and the outlet temperature of the spray dryer was set to 85°C, thereby producing secondary silicon particles having an average size (D50) of 5 $\mu$m.

**1.2 Heat Treatment Process**

The second silicon particles (secondary particles) were introduced into a calcining furnace and subjected to a heat treatment process under the heat treatment temperature conditions shown in to Table 1 below, thereby producing final anode active materials having a carbon layer deposited thereon.

**<Examples 5 to 9: where the source of the carbon layer is a-C>**

Secondary silicon particles were produced by dispersing first silicon particles (D50: 120 nm) obtained by milling in ethanol and spraying the dispersion through a spray dryer. The content of the first silicon particles obtained by milling was adjusted to 3 wt% based on the total weight of the dispersion. Using the nozzle-type spray dryer, pressure (100 Torr) was applied via an inert gas (Ar) to an extent that droplets could be evenly sprayed, and the outlet temperature of the spray dryer was set to 85°C, thereby producing secondary silicon particles having an average size (D50) of 5 $\mu$m. Thereafter, acetylene gas was additionally introduced according to a chemical vapor deposition process in the above-described heat treatment process, thereby producing final anode active materials.

**<Examples 10 to 21: where the source of the carbon layer is pitch + a-C>**

An anode active materials were produced in the same manner as in Examples 1 to 4, except that acetylene gas was additionally introduced according to a chemical vapor deposition process in the heat treatment process, thereby producing final anode active materials.

**<Comparative Example 1: Anode Active Material Not Subjected to Heat Treatment Process>**

An anode active material was produced in the same manner as in Examples 5 to 9, except that the heat treatment process and the chemical vapor deposition process were omitted, and the crystalline size of the first silicon particles was adjusted to the crystalline size shown in Table 1 below.

**<Comparative Example 2: where the temperature of the heat treatment process is 400°C>**

An anode active material was produced in the same manner as in Comparative Example 1, except that the crystalline size of the first silicon particle was adjusted to the crystalline size shown in Table 1 below, and the second silicon particles were introduced into the calcining furnace and subjected to a heat treatment process at 400°C.

**<Comparative Example 3: where the temperature of the heat treatment process is 600°C>**

An anode active material was produced in the same manner as in Comparative Example 1, except that the crystalline size of the first silicon particle was adjusted to the crystalline size shown in Table 1 below, and the second silicon particles were introduced into the calcining furnace and subjected to a heat treatment process at 600°C.

[Table 1]

| | Carbon layer type[1) | Carbon layer thickness [nm] | Crystalline size of first silicon particles [2) [nm] | Carbon content [3) [wt%] | Heat treatment temperature of secondary particles (°C) |
|---|---|---|---|---|---|
| Example 1 | Pitch | 10 | 17.8 | 5.15 | 800 |
| Example 2 | Pitch | 15 | 17.8 | 7.22 | 800 |
| Example 3 | Pitch | 20 | 17.8 | 10.90 | 800 |
| Example 4 | Pitch | 30 | 17.8 | 19.78 | 800 |
| Example 5 | a-C | 15 | 17.8 | 10.52 | 800 |
| Example 6 | a-C | 25 | 17.8 | 16.52 | 800 |
| Example 7 | a-C | 40 | 17.8 | 22.05 | 800 |
| Example 8 | a-C | 55 | 17.8 | 27.49 | 800 |
| Example 9 | a-C | 70 | 17.8 | 33.15 | 800 |
| Example 10 | Pitch + a-C | 45 | 14 | 35.08 | 600 |
| Example 11 | Pitch + a-C | 45 | 15 | 35.08 | 700 |
| Example 12 | Pitch + a-C | 45 | 20 | 35.08 | 850 |
| Example 13 | Pitch + a-C | 45 | 25 | 35.08 | 900 |
| Example 14 | Pitch + a-C | 45 | 30 | 35.08 | 1,000 |
| Example 15 | Pitch + a-C | 45 | 31 | 35.08 | 1,200 |
| Example 16 | Pitch + a-C | 45 | 17.8 | 35.08 | 800 |
| Example 17 | Pitch + a-C | 60 | 17.8 | 51.08 | 800 |
| Example 18 | Pitch + a-C | 80 | 17.8 | 59.80 | 800 |
| Example 19 | Pitch + a-C | 100 | 17.8 | 68.52 | 800 |
| Example 20 | Pitch + a-C | 105 | 17.8 | 75.54 | 800 |
| Example 21 | Pitch + a-C | 110 | 17.8 | 79.64 | 800 |
| Comparative Example 1 | - | - | 8.17 | 2.18 | - |
| Comparative Example 2 | - | - | 12 | 2.15 | 400 |
| Comparative Example 3 | - | - | 13 | 2.00 | 600 |

(continued)

| | Carbon layer type[1] | Carbon layer thickness [nm] | Crystalline size of first silicon particles [2] [nm] | Carbon content [3] [wt%] | Heat treatment temperature of secondary particles (°C) |
|---|---|---|---|---|---|
| 1) a-C: Amorphous carbon layer derived from acetylene gas<br>2) Crystalline size of Si(111) plane measured using X-ray diffraction (XRD) analysis<br>3) Carbon content of anode active material measured using elemental analyzer | | | | | |

**[Production Example 2: Production of Half-Cell]**

Production of Anode

Graphite, the anode active material produced in Production Example 1, carboxy methyl cellulose (CMC) and styrene-butadiene rubber (SBR) were mixed together at a weight ratio of 87:10:1.5:1.5 and dispersed in water, thereby preparing an anode slurry (total solid content: 50 wt%). Thereafter, one surface of a copper foil (thickness: 18 $\mu$m) as a current collector was coated with the anode slurry which was then dried at 90°C for 180 minutes, thereby producing an anode having a total thickness of 90 $\mu$m.

Production of Half-Cell

The produced anode, a counter electrode (Li metal), and a polyethylene separator interposed between the anode and the counter electrode were placed in a battery case, and then an electrolyte solution containing 1 M LiPF$_6$ dissolved in a mixture of fluoroethylene carbonate (FEC) and dimethyl carbonate (DMC) (3:7 v/v) was injected into the battery case, thereby producing a half-cell injected with the electrolyte solution.

**[Experimental Example 2: Evaluation of Performance of Half-Cell]**

The performance of the half-cell produced in Production Example 2 was evaluated using the WBCS3000 battery cycler (WonATech) in the following manner.

**1) R (Discharge Peak Ratio)**

In order to evaluate the stable charge/discharge of the half-cell produced in Production Example 2, the evaluation was performed with a current of 0.1C, and a dQ/dV curve versus voltage was drawn with the charge and voltage values during charge/discharge, with the differential capacity versus voltage (dQ/dV) on the y-axis and the voltage on the x-axis. Then, the discharge peak ratio values for dQ/dV at around 0.5 V were determined and the results are shown in Table 2 below.

**2) 1-Cycle Capacity**

After the initial stabilization stage, the half-cell produced in Production Example 2 was evaluated at a current level of 0.5 C, and the initial capacity was measured. The results are shown in Table 2 below.

**3) Evaluation of Capacity Retention Rate (100-Cycle Capacity Retention Rate)**

After the initial stabilization stage, the half-cell produced in Production Example 2 was subjected to 100 charge/discharge cycles at a current level of 0.5 C, and then the ratio (%) of discharge capacity/initial capacity was measured. The results are shown in Table 2 below.

[Table 2]

| | R (discharge peak ratio)[1] | 1-cycle capacity [mAh/g] | 100-cycle capacity retention rate [%] |
|---|---|---|---|
| Example 1 | 1.42 | 410 | 85 |
| Example 2 | 1.80 | 412 | 86 |

(continued)

| | R (discharge peak ratio)[1] | 1-cycle capacity [mAh/g] | 100-cycle capacity retention rate [%] |
|---|---|---|---|
| Example 3 | 2.25 | 415 | 88 |
| Example 4 | 2.95 | 418 | 89 |
| Example 5 | 1.20 | 410 | 86 |
| Example 6 | 1.46 | 415 | 87 |
| Example 7 | 1.56 | 418 | 88 |
| Example 8 | 1.64 | 420 | 90 |
| Example 9 | 1.82 | 422 | 91 |
| Example 10 | 1.50 | 422 | 91 |
| Example 11 | 1.52 | 430 | 93 |
| Example 12 | 2.17 | 435 | 92 |
| Example 13 | 3.05 | 425 | 91 |
| Example 14 | 3.45 | 420 | 90 |
| Example 15 | 3.40 | 415 | 89 |
| Example 16 | 2.15 | 445 | 95 |
| Example 17 | 2.28 | 450 | 97 |
| Example 18 | 2.78 | 440 | 94 |
| Example 19 | 2.98 | 425 | 92 |
| Example 20 | 3.00 | 420 | 89 |
| Example 21 | 3.40 | 415 | 88 |
| Comparative Example 1 | 0.667 | 395 | 75 |
| Comparative Example 2 | 1.125 | 400 | 78 |
| Comparative Example 3 | 1.143 | 405 | 80 |

1) $R = (dQ^2/dV^2)/(dQ^1/dV^1)$, $dQ^1/dV^1$ is the maximum discharge peak of the first charge/discharge cycle at 0.5V, and $dQ^2/dV^2$ is the maximum discharge peak of the second charge/discharge cycle at 0.5 V.

Comparing Examples 1 to 4 in Table 2 above, it can be confirmed that, as the carbon content increases, the initial capacity and the capacity retention rate tend to increase, and $R = (dQ^2/dV^2)/(dQ^1/dV^1)$ increases significantly depending on the content of pitch. This is believed to be because the pitch interacts with the silicon crystal during crystallization of the pitch.

Comparing Examples 5 to 9 in Table 2 above, it can be confirmed that, similar to Examples 1 to 4 above, as the carbon content increases, the initial capacity and the capacity retention rate tend to increase. However, it can be confirmed that, the thickness of the outer carbon layer tends to increase as the content of carbon increases, compared to when the pitch is used in the same amount of carbon , and this is because in the case of the pitch, a portion of the pitch is lost without being crystallized in the crystallization step, causing pores, but in the process of depositing the amorphous carbon layer, there is no factor causing pores because acetylene gas is continuously supplied.

Comparing Examples 10 to 15 in Table 2 above, it can be confirmed that, R tends to increase as the crystalline size of the first silicon particles increases in some cases. However, it can be confirmed that, when the crystalline size of the primary silicon particles becomes excessively large, excessive a-SiLi$_\delta$ is generated, and for this reason, the capacity and the capacity retention rate tend to decrease. Therefore, it can be confirmed that the capacity of the half-cell increases when the crystalline size of the primary silicon particles is 15 to 30 nm, specifically 17 to 20 nm.

When comparing Examples 16 to 21 in which both pitch and acetylene gas are used as carbon sources in Table 2 above, it can be confirmed that the thickness of the carbon layer versus the carbon content is significantly reduced. In addition, it can be confirmed that, in the case of Example 17 in which the thickness of the carbon layer is about 60 nm, the best capacity and capacity retention rate are shown, and when the carbon layer is excessively deposited beyond this thickness, the amount of silicon that can accept lithium decreases, and thus the capacity and the capacity retention rate tend to decrease rather than increase. In addition, it can be confirmed that, when the thickness of the carbon layer is deposited to a thickness of 110 nm beyond 80 nm, the capacity and the capacity retention rate decrease compared to when the amorphous carbon layer is deposited alone. It can be seen that, when producing a composite having a carbon layer deposited using two carbon sources, the thickness of the carbon layer is preferably 20 to 80 nm, most preferably 40 to 80 nm.

Comparing Comparative Examples 1 to 3 in Table 2 above, it can be confirmed that the capacity and the capacity retention rate are improved as a result of controlling the crystalline size of the primary silicon particles through heat treatment without adding a carbon layer, compared to Comparative Example 1 in which no heat treatment is performed, and that the increased crystalline size is reflected in R.

Referring to the Comparative Examples and the Examples in Table 2 above, it can be confirmed that R should be 1.2 or more in order for the silicon particles obtained by milling to restore the crystalline size and exhibit the proper capacity.

**[Production Example 3: Production of Full-Cell]**

Production of Cathode

NCM(Li[NiCoMn]$O_2$), carbon black and nitrile-butadiene rubber (NBR) were mixed together at a weight ratio of 96:2:2 and the mixture was added to a solvent (N-methylpyrrolidone), thereby preparing a cathode slurry having a total solid content of 75 wt%. One surface of an aluminum foil (thickness: 20 $\mu$m) was coated with the cathode slurry which was then dried at 120°C for 120 minutes, thereby producing a cathode having a total thickness of 70 $\mu$m.

Production of Full-Cell

A cell was produced in the same manner as in Production Example 2, except that the produced cathode was used instead of the counter electrode (Li metal), thereby producing a full-cell. Here, the ratio of the capacity of the anode per unit area to the capacity of the cathode per unit area (N/P ratio) was adjusted to 1.1, and the electrodes were assembled into a 2032 coin cell (14 pi for the cathode and 16 pi for the anode).

**[Experimental Example 3: Evaluation of Performance of Full-Cell]**

The capacity retention rate of the full-cell produced in Production Example 3 was evaluated in the same manner as in Experimental Example 2 at a current level of 0.5 C, with a charge voltage of 4.2 V and a discharge voltage of 2.8 V.

[Table 3]

| | Evaluation of capacity retention rate 1-cycle capacity [mAh/g] | Evaluation of capacity retention rate 100-cycle capacity retention rate [%] |
|---|---|---|
| Comparative Example 1 | 150 | 65 |
| Example 4 | 180 | 78 |
| Example 9 | 182 | 80 |
| Example 17 | 185 | 90 |

Referring to Table 3 above, it can be confirmed that the capacity and capacity retention rate of the full-cell are significantly improved by performing heat treatment on the secondary silicon particles having the carbon layer deposited thereon, and that the full-cell of Example 17, which has the carbon layer deposited using both carbon sources (pitch and acetylene gas) and consisting of a mixture of crystalline carbon and amorphous carbon, has the best performance. Thereby, it can be confirmed that, when silicon particles having deposited thereon a carbon layer consisting of a mixture of amorphous carbon and crystalline carbon are used, the conductivity and durability of the full-cell are ensured and the capacity and capacity retention rate of the full-cell are further improved.

Although the preferred embodiments of the present disclosure have been described in detail above, the scope of the present disclosure is not limited thereto, and various modifications and improvements made by those skilled in the art using the basic concept of the present disclosure as defined in the following claims also fall within the scope of the present disclosure.

**Claims**

1. An anode active material comprising:

   second silicon particles each composed of an aggregate of first silicon particles; and
   a carbon layer on the second silicon particles,
   wherein a differential capacity plot for a half-cell comprising the anode active material satisfies the following Equation 1:

   [Equation 1]

   $$R = (dQ^2/dV^2)/(dQ^1/dV^1) \geq 1.2$$

   wherein $dQ^1/dV^1$ is a maximum discharge peak of a first charge/discharge cycle at 0.3 to 0.6 V, $dQ^2/dV^2$ is a maximum discharge peak of a second charge/discharge cycle at 0.3 to 0.6 V, and R is the ratio of the maximum discharge peaks.

2. The anode active material according to claim 1, wherein R in Equation 1 is 3.5 or less.

3. The anode active material according to claim 2, wherein R in Equation 1 is 1.5 to 2.8.

4. The anode active material according to claim 1, wherein the carbon layer comprises any one selected from the group consisting of crystalline carbon, amorphous carbon, and a combination thereof.

5. The anode active material according to claim 4, wherein the carbon layer comprises the crystalline carbon derived from pitch and the amorphous carbon derived from a carbon precursor.

6. The anode active material according to claim 1, wherein the anode active material has a carbon content of 5 to 80 wt% based on the total weight of the anode active material.

7. The anode active material according to claim 6, wherein the anode active material has a carbon content of 35 to 60 wt% based on the total weight of the anode active material.

8. The anode active material according to claim 1, wherein the first silicon particles have a crystalline size of 15 to 30 nm.

9. The anode active material according to claim 8, wherein the first silicon particles have a crystalline size of 17 to 20 nm.

10. The anode active material according to claim 1, wherein the carbon layer has a thickness of 20 to 80 nm.

11. The anode active material according to claim 10, wherein the carbon layer has a thickness of 40 to 80 nm.

12. An anode comprising the anode active material according to any one of claims 1 to 11.

13. A secondary battery comprising the anode according to claim 12.

## INTERNATIONAL SEARCH REPORT

| International application No. |
| --- |
| **PCT/KR2023/006582** |

### A. CLASSIFICATION OF SUBJECT MATTER

**H01M 4/38**(2006.01)i; **H01M 4/36**(2006.01)i; **H01M 4/134**(2010.01)i; **H01M 10/0525**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/38(2006.01); H01M 10/052(2010.01); H01M 4/139(2010.01); H01M 4/36(2006.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘(silicon), 탄소(carbon), 미분전하용량곡선(differential capacity plot), 음극 (anode, negative electrode), 피치(pitch), 아세틸렌(acetylene), 열처리(heat treatment), 이차전지(secondary battery)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2020-0065562 A (POSCO et al.) 09 June 2020 (2020-06-09)<br>See paragraphs [0010] and [0123]-[0124], and claims 1-18. | 1-13 |
| A | KR 10-2021-0047643 A (GRAPSIL CO., LTD.) 30 April 2021 (2021-04-30)<br>See paragraphs [0106]-[0109], and claim 1. | 1-13 |
| A | WO 2021-157459 A1 (DIC CORPORATION et al.) 12 August 2021 (2021-08-12)<br>See paragraph [0104]. | 1-13 |
| A | CN 103633295 A (SHANGHAI SHANSHAN TECH CO., LTD.) 12 March 2014 (2014-03-12)<br>See claims 1-7. | 1-13 |
| A | JP 2018-170246 A (TOSOH CORP) 01 November 2018 (2018-11-01)<br>See claims 6-9. | 1-13 |

☐ Further documents are listed in the continuation of Box C.　　☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 September 2023** | **04 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

13

**INTERNATIONAL SEARCH REPORT**
Information on patent family members

International application No.

**PCT/KR2023/006582**

| Patent document cited in search report | | | Publication date (day/month/year) | Patent family member(s) | | | Publication date (day/month/year) |
|---|---|---|---|---|---|---|---|
| KR | 10-2020-0065562 | A | 09 June 2020 | CN | 113169321 | A | 23 July 2021 |
| | | | | EP | 3890067 | A1 | 06 October 2021 |
| | | | | JP | 2022-510984 | A | 28 January 2022 |
| | | | | JP | 7209089 | B2 | 19 January 2023 |
| | | | | KR | 10-2179975 | B1 | 17 November 2020 |
| | | | | US | 2021-0408527 | A1 | 30 December 2021 |
| | | | | WO | 2020-111446 | A1 | 04 June 2020 |
| KR | 10-2021-0047643 | A | 30 April 2021 | KR | 10-2320977 | B1 | 03 November 2021 |
| WO | 2021-157459 | A1 | 12 August 2021 | CN | 114902448 | A | 12 August 2022 |
| | | | | EP | 4102597 | A1 | 14 December 2022 |
| | | | | KR | 10-2022-0139298 | A | 14 October 2022 |
| | | | | US | 2022-0384783 | A1 | 01 December 2022 |
| | | | | WO | 2021-157459 | A1 | 12 August 2021 |
| CN | 103633295 | A | 12 March 2014 | CN | 103633295 | B | 02 March 2018 |
| JP | 2018-170246 | A | 01 November 2018 | JP | 6961980 | B2 | 05 November 2021 |

Form PCT/ISA/210 (patent family annex) (July 2022)